# EUROPÄISCHE PATENTSCHRIFT

(11) **EP 1 277 392 B1**
(45) Veröffentlichungstag und Bekanntmachung des Hinweises auf die Patenterteilung: **29.03.2006**
(21) Anmeldenummer: 02013050.6
(22) Anmeldetag: 13.06.2002
(51) Int. Cl.: A01D 67/00, A01D 41/12

(54) **Stützradanordnung für eine landwirtschaftliche Arbeitsmaschine**
Support wheel arrangement for an agricultural working machine
Agencement de roue porteuse pour une machine agricole

(30) Priorität: 27.06.2001 DE 10130647
(43) Veröffentlichungstag der Anmeldung: 22.01.2003
(73) Patentinhaber: CLAAS Selbstfahrende Erntemaschinen GmbH, 33428 Harsewinkel (DE)
(72) Erfinder: Heidjann, Franz, 33428 Harsewinkel (DE); Holtmann, Bernd, 48324 Sendenhorst (DE)

(56) Entgegenhaltungen:
- DE-A- 1 457 948
- DE-A- 1 482 255
- DE-A- 2 101 710
- DE-A- 2 140 368
- DE-A- 19 918 551
- US-A- 3 822 534
- US-A- 4 203 275
- US-A- 5 794 423

## Beschreibung

Die Erfindung betrifft eine Stützradanordnung für eine landwirtschaftliche Arbeitsmaschine gemäß dem Oberbegriff der Ansprüche 1 und 10.

Aus der DE 199 18 551 ist eine als Feldhäcksler ausgeführte gattungsgemäße landwirtschaftliche Erntemaschine bekannt geworden, die frontseitig über einen ein landwirtschaftliches Arbeitsgerät aufnehmenden Zwischenanbau verfügt. Damit die Last des landwirtschaftlichen Arbeitsgerätes nicht ausschließlich über die in Fahrtrichtung vorn liegende Trägerfahrzeugachse abgestützt werden muss, sind in zumindest einem Ausführungsbeispiel dem Zwischenanbau Stützräder zugeordnet, die es ermöglichen, dass bei Straßentransport zumindest ein Teil der Masse des landwirtschaftlichen Arbeitsgerätes über diese Stützräder auf dem Boden abgestützt wird. Dies hat zunächst den Vorteil, dass die frontseitige Trägerfahrzeugachse bei Straßenfahrt nicht die gesamte Last des adaptierten landwirtschaftlichen Arbeitsgerätes abstützen muss. Die Adaptierung der Stützräder am Zwischenanbau der landwirtschaftlichen Arbeitsmaschine erfordert jedoch eine erhebliche Versteifung dieses Zwischenanbaus, da beim Fahren auf unebenem Gelände erhebliche Stoßbelastungen auftreten können, die von dem Zwischenanbau aufgenommen werden müssen. Zudem sind die im günstigsten Fall als Nachlaufräder ausgeführten Stützräder nicht in der Lage die Lenkbewegung der landwirtschaftlichen Arbeitsmaschine zu unterstützen, da sie nur in Abhängigkeit von den an ihnen angreifenden Reaktionskräften eine Schwenkbewegung um ihre annähernd vertikale Nachlaufachse ausführen und diese Reaktionskräfte maßgeblich von der Beschaffenheit des überrollten Bodens abhängen.

Die DE 1 457 948 offenbart einen Mähdrescher mit vor den Antriebsrädern angeordneten Stützrädern. Die Stützräder sind auf einer Achse angeordnet, die über Tragarme mit dem Achsgehäuse des Mähdreschers verbunden sind. Die Stützräder berühren nur dann den Boden, wenn die Antriebsräder in den Boden eingesunken sind. In diesen Fällen übernehmen die Stützräder einen Teil der vorderen Achslast und verhindern damit, dass die Antriebräder weiter in den Boden eindrücken. Die Stützräder sind lenkbar auzuführen, wenn sie verhältnismäßig weit vor den Antriebsrädern liegen. Dabei können sie entweder selbsttätig nachlaufend oder an die Fahrzeuglenkung gekoppelt, lenkbar ausgeführt sein.

Der Erfindung liegt deshalb die Aufgabe zugrunde, eine Stützradanordnung für landwirtschaftliche Arbeitsmaschinen so weiterzubilden, dass die beschriebenen Nachteile des Standes der Technik vermieden und eine kraftgerechte Lasteinleitung und eine gute Lenkbarkeit der landwirtschaftlichen Erntemaschine gewährleistet werden.

Erfindungsgemäß wird die Aufgabe durch eine Stützradanordnung für landwirtschaftliche Erntemaschinen mit den kennzeichnenden Merkmalen der Ansprüche 1 gelöst.

Indem das wenigstens eine Stützrad von einem Stützrahmen aufgenommen wird, der sowohl mit der landwirtschaftlichen Erntemaschine als auch mit der Aufnahmevorrichtung in Wirkverbindung steht, wird sichergestellt, dass die an dem wenigstens einen Stützrad angreifenden Belastungen in kraftgerechter Weise auf den Boden übertragen werden, sodass auf konstruktiv aufwendige und damit teure Versteifungen im Bereich des wenigstens einen Stützrades an der Aufnahmevorrichtung verzichtet werden kann.

Ferner ermöglicht die Ausführung des wenigstens einen Stützrades als gelenktes Stützrad eine verbesserte Handhabung der landwirtschaftlichen Erntemaschine bei Kurvenfahrt, was sich vor allem in einer verbesserten Wendigkeit und einem geringeren Kurvenradius äußert.

In einer vorteilhaften Weiterbildung der Erfindung wird der Stützrahmen des wenigstens einen Stützrades von einem ersten Tragarm und wenigstens einem weiteren Tragarm gebildet, wobei die Tragarme schwenkbeweglich mit der landwirtschaftlichen Erntemaschine und der Aufnahmevorrichtung verbunden sind, sodass das wenigstens eine Stützrad uneingeschränkte Schwenkbewegungen in vertikaler Richtung ausführen kann.

Eine besonders kraftgerechte Konstruktion des Stützrahmens wird dann erreicht, wenn sich der wenigstens eine erste Tragarm im Wesentlichen in horizontaler Richtung erstreckte und der wenigstens eine weitere Tragarm in einer im Wesentlichen vertikalen Richtung das Stützrad mit der Aufnahmevorrichtung verbindet. Auf diese Weise wird sichergestellt, dass die beispielsweise beim Auffahren auf ein Hindernis an dem jeweiligen Stützrad angreifenden Reaktionskräfte nur geringe Momente im zugehörigen Stützrahmen verursachen.

Eine besonders vorteilhafte Ausführung ergibt sich dann, wenn zumindest einer der Tragarme längenveränderlich ausgeführt ist, sodass stets sichergestellt ist, dass das wenigstens eine Stützrad unabhängig von der momentanen Stellung der Aufnahmevorrichtung permanenten Kontakt zum Boden hat und eine permanente Entlastung der Trägerfahrzeugachsen gewährleistet ist.

In konstruktiv besonders einfacher Weise kann diese Längenveränderung wenigstens eines Tragarms dadurch erreicht werden, dass der oder die Tragarme als Hubzylinder und/oder Teleskoparm ausgeführt sind.

Damit die von den Tragarmen zwischen Trägerfahrzeug und Boden zu übertragenden Kräfte verschleißreduzierend gedämpft übertragen werden, kann dem wenigstens einen längenveränderlichen Tragarm ein dessen Bewegung dämpfendes Element zugeordnet sein.

In vorteilhafter Weiterbildung der Erfindung kann die landwirtschaftliche Erntemaschine über eine Vielzahl von Stützrädern verfügen, wobei wenigstens ein Teil oder alle Stützräder lenkbar sind, sodass die Wendigkeit der landwirtschaftlichen Erntemaschine auch bei größerer Anzahl von Stützädern erhalten bleibt.

Eine konstruktiv besonders einfache und kostengünstige Ausführung eines Lenkmechanismus für Stützräder wird dann erreicht, wenn zumindest ein erstes Stützrad und ein weiteres Stützrad über einen Koppelmechanismus miteinander verbunden sind und von einem gemeinsamen Lenkzylinder um eine annähernd vertikale Achse verschwenkt werden.

Um eine Beschädigung des bodennah angeordneten Lenkmechanismus zu vermeiden, ist der Lenkmechanismus in einer weiteren vorteilhaften Ausgestaltung der Erfindung entlang der die Stützräder aufnehmenden Tragarme und der in Fahrtrichtung vom liegenden Achse der landwirtschaftlichen Arbeitsmaschine geführt.

Eine konstruktiv sehr einfache Ausführung des Lenkmechanismus ergibt sich dann, wenn der Koppelmechanismus von die jeweilige Schwenkachse aufnehmenden Lenkhebeln gebildet wird, die über Koppelstangen gelenkig mit einem Winkelhebel verbunden sind, wobei jeder Winkelhebel um eine im Wesentlichen vertikale Schwenkachse drehbar an dem jeweiligen Tragarm angeordnet ist und die Winkelhebel benachbarter lenkbarer Stützräder über eine Verbindungsstrebe miteinander verbunden sind und an wenigstens einem Winkelhebel der Lenkzylinders des Koppelmechanismus angreift.

Um die Lenkbewegung der mit Stützrädern ausgerüsteten Erntemaschine weiter zu erhöhen, kann in einer vorteilhaften Weiterbildung der Erfindung die Lenkbewegung des wenigstens einen lenkbaren Stützrades an die Lenkbewegung der wenigstens einen gelenkten Achse der landwirtschaftlichen Erntemaschine gekoppelt sein. In besonders einfacher Weise kann diese Koppelung dadurch erreicht werden, dass die Lenkzylinder des wenigstens einen Stützrades und der gelenkten Achse miteinander gekoppelt sind.

Um die Menge des erforderlichen energieübertragenden Mediums und der dafür erforderlichen Leitungssysteme gering zu halten, kann der Lenkwinkel an zumindest einem Laufrad der gelenkten Achse des Trägerfahrzeugs mittels eines an sich bekanntem Radwinkelsensor mit elektronischer Steuereinheit abgegriffen werden und ein Lenksignal an den wenigstens einen Lenkzylinder des wenigstens einen lenkbaren Stützrades übertragen werden, welches an dem wenigstens einen lenkbaren Stützrad zu einer selbsttätigen Einstellung des invertierten Lenkwinkels führt.

Um die landwirtschaftliche Erntemaschine auch ohne die erfindungsgemäßen Stützräder betreiben zu können, sind die erfindungsgemäßen Stützräder und der ihnen zugeordnete Stützrahmen demontierbar an der landwirtschaftlichen Arbeitsmaschine adaptiert.

Damit sich das wenigstens eine Stützrad auch bei nicht adaptierten landwirtschaftlichen Arbeitsgerät auf dem Boden bewegt, kann zwischen Aufnahmevorrichtung und landwirtschaftlicher Arbeitsmaschine eine Zugstange zwischengeschaltet sein, die das wenigstens eine Stützrad stets in Richtung Boden zwingt.

In einer weiteren vorteilhaften Ausgestaltung der Erfindung kann das wenigstens eine lenkbare Stützrad die Bewegung der landwirtschaftlichen Arbeitsmaschine unterstützend auch aktiv angerieben sein.

Weiter vorteilhafte Ausgestaltungen sind Gegenstand weiterer Unteransprüche und werden anhand von Zeichnungen näher erläutert.

Es zeigen:
- Figur 1: den vorderen Teil einer landwirtschaftliche Erntemaschine in Seitenansicht
- Figur 2: eine Detailansicht der erfindungsgemäßen Stützradanordnung
- Figur 3: eine weitere Detailansicht der erfindungsgemäßen Stützradanordnung
- Figur 4: ein Draufsicht auf die Achsanordnung der landwirtschaftlichen Erntemaschine mit erfindungsgemäßer Stützradanordnung

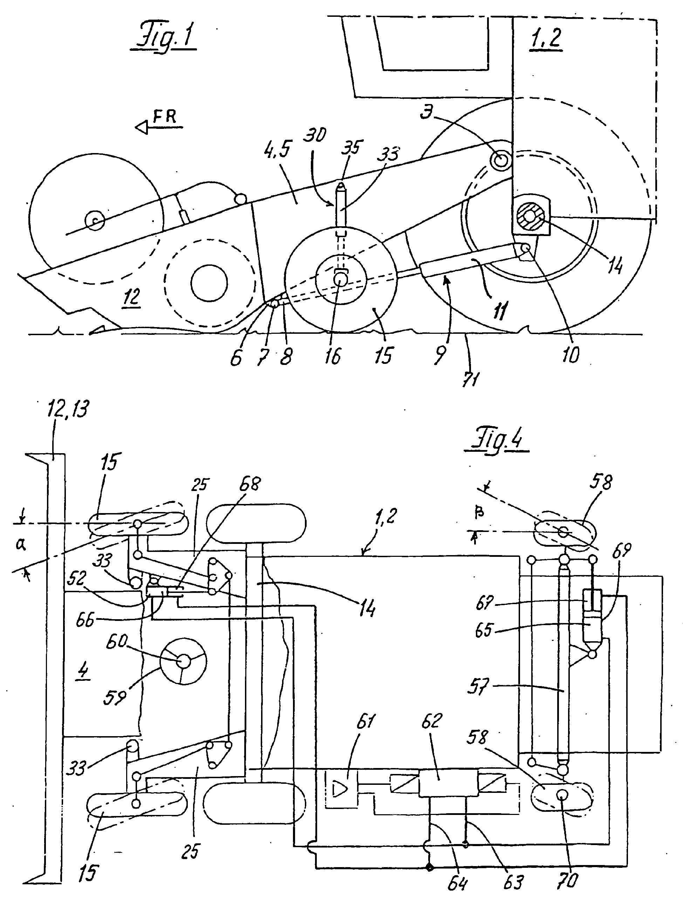

In Figur 1 ist eine als Mähdrescher 2 ausgeführte landwirtschaftliche Erntemaschine 1 dargestellt, die in ihrem frontseitigen Bereich eine quer zur Fahrtrichtung FR weisende Schwenkachse 3 aufnimmt, die die als an sich bekannter Schrägförderer 4 ausgeführte Aufnahmevorrichtung 5 in vertikaler Richtung verschwenkbar aufnimmt. Untenseitig sind dem Schrägförderer 4 Halteflansche 6 angeformt, die einenends um eine quer zur Fahrrichtung FR weisende Achse 7 verschwenkbar die frontseitigen Enden der Kolbenstangen 8 von Hubzylindern 9 aufnehmen. Trägerfahrzeugseitig sind die Hubzylinder 9 um ebenfalls quer zur Fahrtrichtung FR weisende Achsen 10 schwenkbeweglich an der landwirtschaftlichen Erntemaschine 1 angeordnet. Indem die Hubzylinder 9 druckbeaufschlagt oder druckentlastet werden, bewegen sich die Kolbenstangen 8 aus den Zylindern 11 der Hubzylinder 9 heraus oder tauchen in diese ein, sodass die Aufnahmevorrichtung 5 eine Schwenkbewegung in vertikaler Richtung um die am Trägerfahrzeug 1 angeordnete Achse 3 ausführt. Neben der Realisierung der Schwenkbewegung der Aufnahmevorrichtung 5 haben die Hubzylinder 9 zudem die Aufgabe, die Aufnahmevorrichtung 5 am Trägerfahrzeug 1 abzustützen.

Frontseitig ist der Aufnahmevorrichtung 5 in an sich bekannter und deshalb nicht näher beschriebener Weise ein als Getreideschneidwerk 12 ausgeführtes landwirtschaftliches Arbeitsgerät 13 zugeordnet.

Damit die Last der Aufnahmevorrichtung 5 und des an ihr adaptierten landwirtschaftlichen Arbeitsgerätes 13 nicht allein über die Hubzylinder 9 in das Trägerfahrzeug 1 im Bereich seiner Vorderachse 14 eingeleitet wird, sind der Aufnahmeeinrichtung 5 im Bereich zwischen dem Getreideschneidwerk 12 und der Vorderachse 14 des Mähdreschers 2 beidseitig Stützräder 15 zugeordnet. Die Radachse 16 jedes Stützrades 15 wird von einer Nabe 17 umschlossen, der an ihrem innenseitigen, im Bereich der Stützräder 15 liegenden Ende ein Aufnahmeflansch 18 angeformt ist, der von einer in vertikaler Richtung weisenden im einfachsten Fall als axial gesicherter Bolzen 19 ausgeführten Schwenkachse 20 durchsetzt wird. Im Felgenbereich 21 der Stützräder 15 durchsetzt die vertikale Schwenkachse 20 zudem eine Fühhnmgsöse 22, die anderenends an dem wenigstens einen ersten erfindungsgemäßen Tragarm 23 befestigt ist. Im dargestellten Ausführungsbeispiel ist jedem Stützrad 15 ein solcher Tragarm 23 zugeordnet, wobei jeder Tragarm 23 an seinem das jeweilige Stützrad 15 aufnehmenden Ende von einem beliebig geformten Kopfstück 24 gebildet wird, dem trägerfahrzeugseitig ein Winkelprofilträger 25 mit sich in Richtung der Vorderachse 14 des Trägerfahrzeugs 1 vergrößerndem Querschnitt angeschweißt ist. Der Vorderachse 14 der landwirtschaftlichen Arbeitsmaschine 1 sind frontseitig Halteflansche 26 zugeordnet, die von im einfachsten Fall als axial gesicherte Bolzen 27 ausgeführten quer zur Fahrtrichtung FR weisenden Achsen 28 durchsetzt werden.

Der Abstand zwischen benachbarten Halteflanschen 26 wird von den flanschartigen Verlängerungen 29 der Winkelprofilträger 25 in der Weise durchsetzt, dass der jeweilige Bolzen 27 den ihm zugeordneten Winkelprofilträger 25 in vertikaler Richtung verschwenkbar aufnimmt. Auf diese Weise ist der wenigstens eine erste Tragarm 23 des erfindungsgemäßen Stützrahmens 30 schwenkbeweglich mit der landwirtschaftlichen Erntemaschine 1 im Bereich ihrer Vorderachse 14 verbunden.

Dem Kopfstück 24 des ersten Tragarms 23 ist auf der dem jeweiligen Stützrad 15 abgewandten Seite eine Haltelasche 31 angeformt. Die jeweilige Haltelasche 31 nimmt das frontseitige Ende der Kolbenstange 32 eines Hubzylinders 33 um eine quer zur Fahrtrichtung FR weisende Achse 34 schwenkbar auf, wobei das zylinderseitige Ende des Hubzylinders 33 um eine ebenfalls quer zur Fahrtrichtung FR angeordnete Achse 35 schwenkbar an der Aufnahmevorrichtung 5 der landwirtschaftlichen Erntemaschine 1 befestigt ist. Damit bildet der jeweilige Hubzylinder 33 den wenigstens einen weiteren Tragarm 36 des erfindungsgemäßen Stützrahmens 30, der das wenigstens eine Stützrad 15 schwenkbeweglich mit der Aufnahmevorrichtung 5 der landwirtschaftlichen Erntemaschine 1 verbindet. Auf diese Weise wird jedes der Stützräder 15 über einen aus einem ersten Tragarm 25 und wenigstens einem weiteren Tragarm 36 bestehenden Stützrahmen 30 sowohl mit der landwirtschaftlichen Erntemaschine 1 als auch der Aufnahmevorrichtung 5 verbunden. Es liegt im Rahmen der Erfindung, dass der im Ausführungsbeispiel zweiteilig ausgeführte Stützrahmen 30 einteilig gestaltet ist und dieser einteilige Stützrahmen 30 über eine oder mehrere quer zur Fahrtrichtung FR angeordnete Schwenkachsen 28 schwenkbar an der landwirtschaftlichen Erntemaschine 1 angeordnet wird. Auch wäre es denkbar, dass die Aufnahmevorrichtung 5 über nur einen Hubzylinder 9 oder eine beliebige Anzahl von Hubzylindern 9 an der landwirtschaftlichen Erntemaschine 1 abgestützt wird.

Eine besonders kraftgerechte Ausführung wird dann erreicht, wenn der oder die ersten erfindungsgemäßen Tragarme 23 die Stützräder 15 in einer im Wesentlichen horizontalen Richtung mit der landwirtschaftlichen Erntemaschine 1 verbinden während die zweiten erfindungsgemäßen Tragarme 36 die Stützräder 15 in einer im Wesentlichen vertikalen Richtung mit der Aufnahmevorrichtung 5 verbinden. Indem die zweiten Tragarme 36 als Hubzylinder 33 ausgeführt sind ist zudem gewährleistet, dass die Zuordnung der Stützräder 15 zur Aufnahmevorrichtung 5 in vertikaler Richtung verändert werden kann, sodass die Stützräder 15 unabhängig von der Lage der Aufnahmevorrichtung 5 stets den Boden 71 berühren können.

Es liegt im Rahmen der Erfindung, dass der im Ausführungsbeispiel als Hubzylinder 9 ausgeführte Tragarm 36 als Teleskoparm 37 ausgebildet ist und die Bewegung der gegeneinander verschiebbaren Profile 38, 39 des Teleskoparms 37 im einfachsten Fall mittels Druckfeder 40 gedämpft ist, wobei eine derartige Druckfeder 40 in an sich bekannter Weise auch in dem Hubzylinder 9 integriert sein kann.

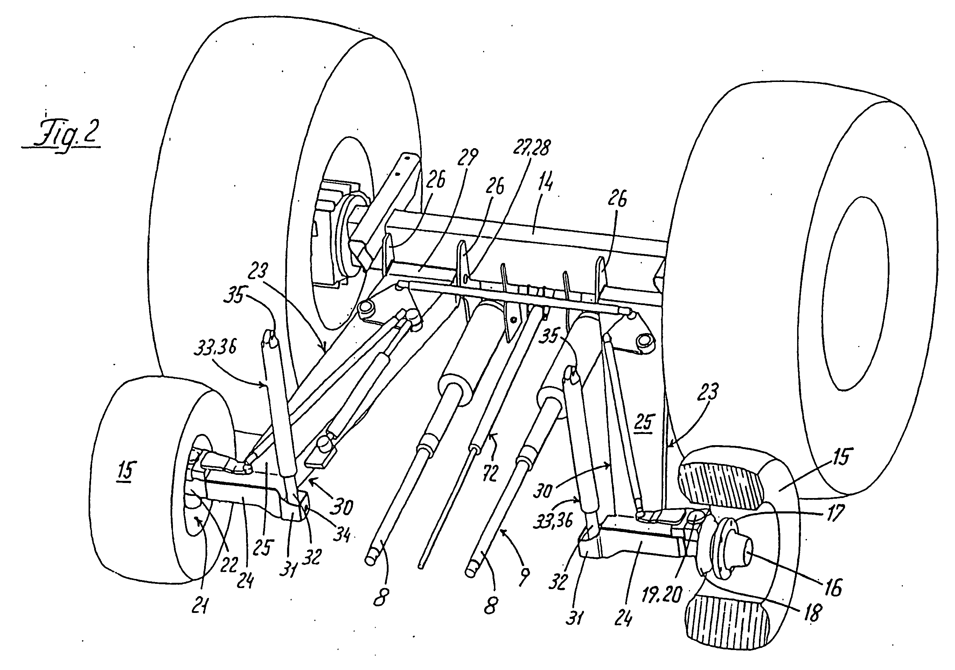

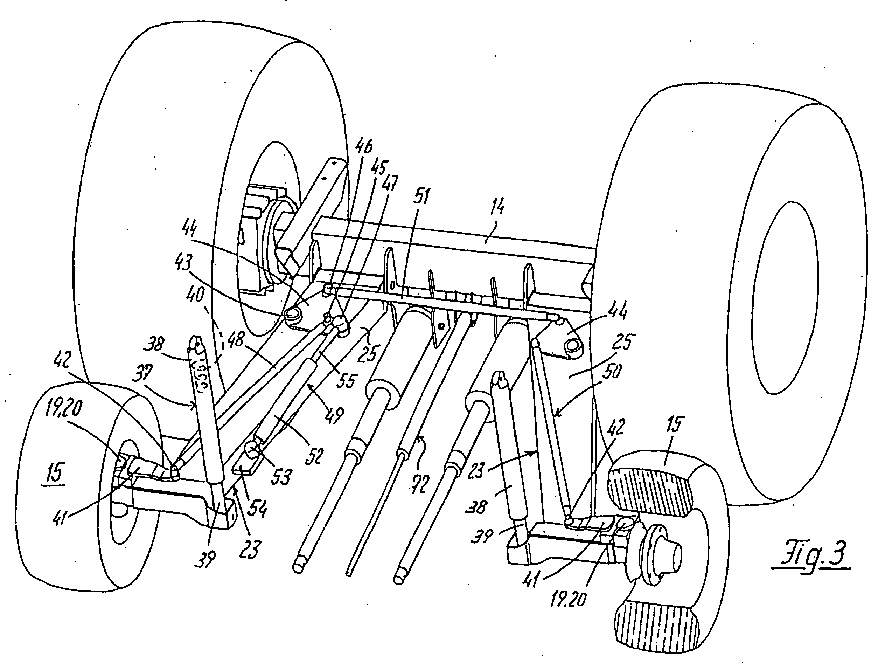

In vorteilhafter Weiterbildung der Erfindung wird der die vertikale Schwenkachse 20 der Stützräder 15 bildende Bolzen 19 gemäß Figur 3 obenseitig von einem Lenkhebel 41 umgriffen, dem einenends ein in vertikaler Richtung weisender Stehbolzen 42 zugeordnet ist. Der das jeweilige Stützrad 15 aufnehmende Tragarm 23 verfügt an seinem der Vorderachse 14 der landwirtschaftlichen Erntemaschine 1 zugeordneten Ende über einen in vertikaler Richtung weisenden Stehbolzen 43. An dem Stehbolzen 43 ist ein Winkelhebel 44 schwenkbevireglich angeordnet, dem wiederum eine Vielzahl von Stehbolzen 45, 46, 47 drehfest zugeordnet sind. Eine erste Koppelstange 48 verbindet den Stehbolzen 42 des Lenkhebels 41 schwenkbeweglich mit einem auf dem Winkelhebel 44 angeordneten Stehbolzen 45, wobei sich die Koppelstange 48 oberhalb und im Bereich des Winkelprofilträgers 25 des jeweiligen Tragarms 23 in Richtung Vorderachse 14 der landwirtschaftlichen Erntemaschine 1 erstreckt. Im dargestellten Ausführungsbeispiel gemäß Figur 3 sind den benachbarten Stützrädern 15 zueinander spiegelbildlich angeordnete Lenkhebel 41, Koppelstangen 48 und Winkelhebel 44 zugeordnet, die jeweils einen Teillenkmechanismus 49, 50 für das jeweilige Stützrad 15 bilden. Im Bereich der Vorderachse 14 sind die beiden Teillenkmechanismen 49, 50 über eine mit den rückwärtigen Stehbolzen 46 der Winkelhebel 44 schwenkbeweglich verbundene Verbindungsstrebe 51 miteinander gekoppelt. Einem der Winkelhebel 44 ist über einen weiteren Stehbolzen 47 ein Lenkzylinder 52 schwenkbeweglich zugeordnet, der anderenends ebenfalls um eine vertikale Achse 53 schwenkbar von einem an dem Winkelprofilträger 25 befestigten Halteflansch 54 aufgenommen wird. Durch Druckbeaufschlagung des doppeltwirkenden Lenkzylinders 52 kann die Kolbenstange 55 aus dem Lenkzylinder 52 herausgeschoben oder in diesen hineinbewegt werden, wobei die Stützräder 15 gleichgerichtete Schwenkbewegungen um ihre vertikalen Schwenkachsen 20 ausführen. Es liegt im Rahmen der Erfindung, dass der landwirtschaftlichen Erntemaschine 1 nur ein erfindungsgemäß lenkbares Stützrad 15 oder eine Vielzahl von erfindungsgemäß lenkbaren Stützrädern 15 zugeordnet sind oder bei Anordnung mehrerer Stützräder 15 nur ein Teil der Stützräder 15 lenkbar ist.

In einer vorteilhaften Weiterbildung der Erfindung kann die Lenkbewegung der gelenkten Achse 57 der landwirtschaftlichen Erntemaschine 1 mit ihren Laufrädern 58 und die Lenkbewegung der erfindungsgemäßen Stützräder 15 aneinander gekoppelt sein. Im einfachsten Fall kann dies dadurch erreicht werden, dass dem am Trägerfahrzeug 1 angeordneten Lenkrad 59 ein Drehwinkelsensor 60 zugeordnet ist, dessen Ausgangssignal in einer elektronischen Steuereinheit 61 ein Ausgangssignal zur Verstellung eines an sich bekannten Wegeventils 62 in Abhängigkeit von der Stellung des Lenkrades 59 generiert. Ausgangsseitig sind dem Wegeventil 62 Leitungssysteme 63, 64 zugeordnet, die jeweils die kolbenflächenseitigen Druckkammern 65, 66 oder die kolbenstangenseitigen Druckkammern 67, 68 der Lenkzylinder 52, 69 miteinander verbinden, sodass die Laufräder 58 der gelenkten Achse 57 des Trägerfahrzeugs 1 und die erfindungsgemäßen Stützräder 15 gleichzeitig gelenkt werden. Aufgrund der Ausführung des erfindungsgemäßen Lenkmechanismus 49, 50, 51 werden die Laufräder 58 der gelenkten Achse 57 und die gelenkten Stützräder 15 in entgegengesetzter Richtung ausgelenkt, sodass die gelenkten Stützräder 15 die Lenkbewegung der landwirtschaftlichen Arbeitsmaschine 1 unterstützen. Eine besonders gute Unterstützung der Lenkbewegung des Trägerfahrzeugs 1 wird dann erreicht, wenn der Lenkwinkel α der Stützrädern 15 dem invertierten Wert des Lenkwinkels β der Laufräder 58 der gelenkten Achse 57 der landwirtschaftlichen Erntemaschine 1 entspricht.

In vorteilhafter Weiterbildung der Erfindung kann wenigstens einem der gelenkten Laufräder 58 der Lenkachse 57 der landwirtschaftlichen Erntemaschine 1 ein an sich bekannter Radwinkelsensor 70 zugeordnet sein, der ein in einer elektronischen Steuereinheit 61 verarbeitbares vom Lenkwinkel β des Laufrades 58 abhängiges Ausgangssignal generiert, welches in der elektronischen Steuereinheit 61 wiederum ein Ausgangssignal erzeugt, welches unmittelbar an dem wenigstens einen lenkbaren Stützrad 15 zur Auslenkung dieses wenigstens einen Stützrades 15 um den Lenkwinkel α führt.

Um auch bei fehlendem landwirtschaftlichen Arbeitsgerät 13 sicherzustellen, dass die erfindungsgemäßen Stützräder 15 eine Mindestlast auf dem Boden 71 abstützen, können einerseits die die Aufnahmevorrichtung 5 verschwenkenden Hubzylinder 9 als doppelt wirkende Hubzylinder 9 ausgeführt sein, sodass über die in den Zylinder 11 der Hubzylinder 9 einfahrende Kolbenstange 8 festgelegt werden kann, wie hoch die von den Stützräder 15 auf dem Boden 71 abzustützende Last sein soll. Sind die die Aufnahmevorrichtung 5 verschwenkenden Hubzylinder 9 einfachwirkend ausgeführt, kann zwischen Aufnahmevorrichtung 5 und der landwirtschaftlichen Erntemaschine 1 ein Zugzylinder 72 zwischengeschaltet sein, der bei Druckbeaufschlagung die erfindungsgemäßen Stützräder 15 auf den Boden 71 zwingt, wobei über die Druckbeaufschlagung des Zugzylinders 72 die Größe der abzustützenden Last bestimmbar ist.

Es liegt im Rahmen der Erfindung, dass die lenkbaren erfindungsgemäßen Stützräder 15 in nicht dargestellter und an sich bekannter Weise auch aktiv antreibbar ausgeführt sein können.

### Bezugszeichenliste

- 1: landwirtschaftliche Erntemaschine
- 2: Mähdrescher
- 3: Schwenkachse
- 4: Schrägförderer
- 5: Aufnahmevorrichtung
- 6: Halteflansch
- 7: Achse
- 8: Kolbenstange
- 9: Hubzylinder
- 10: Achse
- 11: Zylinder
- 12: Getreideschneidwerk
- 13: Landwirtschaftliches Arbeitsgerät
- 14: Vorderachse
- 15: Stützrad
- 16: Radachse
- 17: Nabe
- 18: Aufuahmeflansch
- 19: Bolzen
- 20: Schwenkachse
- 21: Felgenbereich
- 22: Fühnmgsöse
- 23: Tragarm
- 24: Kopfstück
- 25: Winkelprofilträger
- 26: Halteflansch
- 27: Bolzen
- 28: Achse
- 29: Verlängerung
- 30: Stützrahmen
- 31: Haltelasche
- 32: Kolbenstange

- 33: Hubzylinder
- 34: Achse
- 35: Schwenkachse
- 36: Tragarm
- 37: Teleskoparm
- 38: Profil
- 39: Profil
- 40: Druckfeder
- 41: Lenkhebel
- 42: Stehbolzen
- 43: Stehbolzen
- 44: Winkelhebel
- 45: Stehbolzen
- 46: Stehbolzen
- 47: Stehbolzen
- 48: Koppelstange
- 49: Teillenkmechanismus
- 50: Teillenkmechanismus
- 51: Verbindungsstrebe
- 52: Lenkzylinder
- 53: vertikale Schwenkachse
- 54: Halteflansch
- 55: Kolbenstange
- 56:
- 57: Achse
- 58: Laufräder
- 59: Lenkrad
- 60: Drehwinkelsensor
- 61: elektronische Steuereinheit
- 62: Wegeventil
- 63: Leitungssystem
- 64: Leitungssystem
- 65: kolbenflächenseitige Druckkammer
- 66: kolbenflächenseitige Druckkammer
- 67: kolbenstangenseitige Druckkammer
- 68: kolbenstangenseitige Druckkammer
- 69: Lenkzylinder
- 70: Radwinkelsensor
- 71: Boden
- 72: Zugzylinder

- FR: Fahrtrichtung
- α: Lenkwinkel
- β: Lenkwinkel

## Patentansprüche

1. **Landwirtschaftliche Arbeitsmaschine mit einer** Ernkemaschine, einer Stützradanordnung **und wenigstens einer Aufnahmevorrichtung** (4,5) zur Adaption eines landwirtschaftlichen Arbeitsgeräts , wobei die landwirtschaftliche Arkitsmaschine in ihrem dem Arbeitsgerät zugewandten Bereich ein oder mehrere Stützräder (15) zugeordnet sind,
**dadurch gekennzeichnet,**
**dass** das wenigstens eine Stützrad (15) von einem Stützrahmen (30) aufgenommen wird und der Stützrahmen (30) mit der landwirtschaftlichen Erntemaschine (1, 2) und der Aufnahmevorrichtung (4, 5) in Wirkverbindung steht.

2. Landwirtschaftliche Arbeitsmaschine nach Anspruch 1,
**dadurch gekennzeichnet,**
**dass** der Stützrahmen (30) von einem ersten Tragarm (23) und wenigstens einem weiteren Tragarm (35) gebildet wird, wobei der erste Tragarm (23) mit der landwirtschaftlichen Erntemaschine (1, 2) und der wenigstens eine weitere Tragarm (35) mit der Aufnahmevorrichtung (4, 5) in Wirkverbindung steht.

3. Landwirtschaftliche Arbeitsmaschine nach Anspruch 2,
**dadurch gekennzeichnet,**
**dass** sich der wenigstens eine erste Tragarm (23) im Wesentlichen in horizontaler Richtung erstreckt.

4. Landwirtschaftliche Arbeitsmaschine nach Anspruch 2,
**dadurch gekennzeichnet,**
**dass** sich der wenigstens eine weitere Tragarm (35) im Wesentlichen in vertikaler Richtung erstreckt.

5. Landwirtschaftliche Arbeitsmaschine nach einem oder mehreren der vorhergehenden Ansprüche,
**dadurch gekennzeichnet,**
**dass** die Tragarme (25, 35) schwenkbeweglich mit der landwirtschaftlichen Arbeitsmaschine (1, 2) und der Aufnahmevorrichtung (4, 5) verbunden sind.

6. Landwirtschaftliche Arbeitsmaschine einem oder mehreren der vorhergehenden Ansprüche,
**dadurch gekennzeichnet,**
**dass** wenigstens ein Tragarm (25, 35) längenveränderlich ausgeführt ist.

7. Landwirtschaftliche Arbeitsmaschine nach Anspruch 6,
**dadurch gekennzeichnet,**
**dass** der wenigstens eine längenveränderliche Tragarm (35) als Hubzylinder (33) ausgeführt ist.

8. Landwirtschaftliche Arbeitsmaschine nach Anspruch 6,
**dadurch gekennzeichnet,**
**dass** der wenigstens eine längenveränderliche Tragarm (35) als Teleskoparm (36) ausgeführt ist.

9. Landwirtschaftliche Arbeitsmaschine nach einem oder mehreren der vorhergehenden Ansprüche,
**dadurch gekennzeichnet,**
**dass** die Längenänderung des Teleskoparms (36) und/oder des Hubzylinders (33) durch wenigstens ein Dämpfungselement (39) gedämpft wird.

10. Landwirtschaftliche Arbeitsmaschine mit einer Stützradanordnung nach Anspruch 1
**dadurch gekennzeichnet,**
**dass** das wenigstens eine Stützrad (15) als lenkbares Stützrad (15) ausgeführt ist.

11. Landwirtschaftliche Arbeitsmaschine nach Anspruch 10,
**dadurch gekennzeichnet,**
**dass** in dem dem landwirtschaftlichen Arbeitsgerät (12, 13) zugewandten Bereich der landwirtschaftlichen Arbeitsmaschine (1, 2) eine Vielzahl von Stützrädern (15) angeordnet sind und wenigstens ein Teil der Stützräder (15) lenkbar sind.

12. Landwirtschaftliche Arbeitsmaschine nach einem oder mehreren der vorhergehenden Ansprüche,
**dadurch gekennzeichnet,**
**dass** wenigstens ein erstes lenkbares Stützrad (15) und ein weiteres lenkbares Stützrad (15) um im Wesentlichen in vertikaler Richtung weisende Schwenkachsen (19, 20) schwenkbar sind, wobei das wenigstens eine erste lenkbare Stützrad (15) und das wenigstens eine weitere lenkbare Stützrad (15) über einen Koppelmechanismus (48, 48, 50) miteinander verbunden sind und von zumindest einem gemeinsamen Lenkzylinder (51) verschwenkt werden.

13. Landwirtschaftliche Arbeitsmaschine nach Anspruch 12,
**dadurch gekennzeichnet,**
**dass** der Koppelmechanismus (48, 49) entlang jedes ein lenkbares Stützrad (15) aufnehmenden Tragarms (35) geführt wird, wobei die entlang der Tragarme (35) geführten Teillenkmechanismen (48, 49) im Bereich der Vorderachse (14) der landwirtschaftlichen Arbeitsmaschine (1, 2) über eine Verbindungsstrebe (50) miteinander verbunden sind.

14. Landwirtschaftliche Arbeitsmaschine nach einem oder mehreren der vorhergehenden Ansprüche,
**dadurch gekennzeichnet,**
**dass** der Teillenkmechanismus (48, 49) von einem die jeweilige Schwenkachse (19, 20) aufnehmenden Lenkhebel (40) gebildet wird, der über zumindest eine Koppelstange (47) gelenkig mit einem Winkelhebel (43) verbunden ist, wobei der Winkelhebel (43) um eine im Wesentlichen vertikale Schwenkachse (42) drehbar an dem wenigstens einen weiteren Tragarm (23) angeordnet ist und die Winkelhebel (43) benachbarter lenkbarer Stützräder (15) über eine Verbindungsstrebe (50) miteinander verbunden sind und an wenigstens einem Winkelhebel (43) der Lenkzylinder (51) des Koppelmechanismus (48, 49, 50) angreift.

15. Landwirtschaftliche Arbeitsmaschine nach einem oder mehreren der vorhergehenden Ansprüche,
**dadurch gekennzeichnet,**
**dass** die Lenkbewegung des wenigstens einen lenkbaren Stützrades (15) an die Lenkbewegung der wenigstens einen Lenkachse (56) der landwirtschaftlichen Erntemaschine (1, 2) gekoppelt ist.

16. Landwirtschaftliche Arbeitsmaschine nach Anspruch 15,
**dadurch gekennzeichnet,**
**dass** die Koppelung der Lenkbewegung durch Koppelung der Lenkzylinder (51, 68) erreicht wird.

17. Landwirtschaftliche Arbeitsmaschine nach Anspruch 16,
**dadurch gekennzeichnet,**
**dass** der Lenkwinkel β zumindest eines Laufrades (57) der Lenkachse (56) der landwirtschaftlichen Erntemaschine (1, 2) bestimmt und der invertierte Wert α dieses Lenkwinkels β selbsttätig an dem wenigstens einen lenkbaren Stützrad (15) eingestellt wird.

18. Landwirtschaftliche Arbeitsmaschine nach Anspruch 17,
**dadurch gekennzeichnet,**
**dass** wenigstens einem Laufrad (57) der Lenkachse (56) der landwirtschaftlichen Erntemaschine (1, 2) ein Radwinkelsensor (69) zugeordnet ist, der ein Radwinkelsignal erzeugt und an eine Steuereinheit (60) übergibt und die Steuereinheit (60) ein Lenkwinkelsignal für das wenigstens eine lenkbare Stützrad (15) generiert und an den Lenkzylinder (51) des wenigstens einen lenkbaren Stützrades (15) überträgt, wobei das Lenkwinkelsignal eine Druckbeaufschlagung oder Druckentlastung des Lenkzylinders (51) bewirkt.

19. Landwirtschaftiche Arbeitsmaschine nach einem oder mehreren der vorhergehenden Ansprüche,
**dadurch gekennzeichnet,**
**dass** die Stützradanordnung (15, 30) demontierbar ist.

20. Landwirtschaftliche Arbeitsmaschine nach einem oder mehreren der vorhergehenden Ansprüche,
**dadurch gekennzeichnet,**
**dass** zwischen Aufnahmevorrichtung (4, 5) und landwirtschaftlicher Erntemaschine (1, 2) ein die landwirtschaftliche Erntemaschine (1, 2) mit der Aufnahmevorrichtung (4, 5) verbindender Zugrylinder (70) zwischengeschaltet ist.

21. Landwirtschaftliche Arbeitsmaschine nach einem oder mehreren der vorhergehenden Ansprüche,
**dadurch gekennzeichnet,**
**dass** das wenigstens eine lenkbare Stützrad (15) aktiv angetrieben ist.

## Claims

1. An agricultural working machine comprising a harvesting machine, a support wheel arrangement and at least one receiving device (4, 5) for adaptation of an agricultural implement, wherein one or more support wheels (15) are associated with the agricultural working machine in its region which is towards the implement, **characterised in that** the at least one support wheel (15) is carried by a support frame (30) and the support frame (30) is operatively connected to the agricultural harvesting machine (1, 2) and the receiving device (4, 5).

2. An agricultural working machine according to claim 1 **characterised in that** the support frame (30) is formed by a first carrier arm (23) and at least one further carrier arm (35), wherein the first carrier arm (23) is operatively connected to the agricultural harvesting machine (1, 2) and the at least one further carrier arm (35) is operatively connected to the receiving device (4, 5).

3. An agricultural working machine according to claim 2 **characterised in that** the at least one first carrier arm (23) extends substantially in the horizontal direction.

4. An agricultural working machine according to claim 2 **characterised in that** the at least one further carrier arm (35) extends substantially in the vertical direction.

5. An agricultural working machine according to one or more of the preceding claims **characterised in that** the carrier arms (25, 35) are pivotably movably connected to the agricultural working machine (1, 2) and the receiving device (4, 5).

6. An agricultural working machine according to one or more of the preceding claims **characterised in that** at least one carrier arm (25, 35) is variable in length.

7. An agricultural working machine according to claim 6 **characterised in that** the at least one variable-length carrier arm (35) is in the form of a stroke cylinder (33).

8. An agricultural working machine according to claim 6 **characterised in that** the at least one variable-length carrier arm (35) is in the form of a telescopic arm (36).

9. An agricultural working machine according to one or more of the preceding claims **characterised in that** the variation in length of the telescopic arm (36) and/or the stroke cylinder (33) is damped by at least one damping element (39).

10. An agricultural working machine comprising a support wheel arrangement according to claim 1 **characterised in that** the at least one support wheel (15) is in the form of a steerable support wheel (15).

11. An agricultural working machine according to claim 10 **characterised in that** a plurality of support wheels (15) are arranged in the region of the agricultural working machine (1, 2), which is towards the agricultural implement (12, 13), and at least a part of the support wheels (15) are steerable.

12. An agricultural working machine according to one or more of the preceding claims **characterised in that** at least one first steerable support wheel (15) and a further steerable support wheel (15) are pivotable about pivot axes (19, 20) extending substantially in the vertical direction, wherein the at least one first steerable support wheel (15) and the at least one further steerable support wheel (15) are connected together by way of a coupling mechanism (48, 48, 50) and are pivoted by at least one common steering cylinder (51).

13. An agricultural working machine according to claim 12 **characterised in that** the coupling mechanism (48, 49) is guided along each carrier arm (35) carrying a steerable support wheel (15), wherein the partial steering mechanisms (48, 49) which are guided along the carrier arms (35) are connected together in the region of the front axle (14) of the agricultural working machine (1, 2) by way of a connecting strut (50).

14. An agricultural working machine according to one or more of the preceding claims **characterised in that** the partial steering mechanism (48, 49) is formed by a steering lever (40) which receives the respective pivot axis (19, 20) and which is hingedly connected to an angle lever (43) by way of at least one coupling rod (47), wherein the angle lever (43) is arranged on the at least one further carrier arm (23) rotatably about a substantially vertical pivot axis (42) and the angle levers (43) of adjacent steerable support wheels (15) are connected together by way of a connecting strut (50) and the steering cylinder (51) of the coupling mechanism (48, 49, 50) engages at least one angle lever (43).

15. An agricultural working machine according to one or more of the preceding claims **characterised in that** the steering movement of the at least one steerable support wheel (15) is coupled to the steering movement of the at least one steering axle (56) of the agricultural harvesting machine (1, 2).

16. An agricultural working machine according to claim 15 **characterised in that** coupling of the steering movement is achieved by coupling of the steering cylinders (51,68).

17. An agricultural working machine according to claim 16 **characterised in that** the steering angle β of at least one running wheel (57) of the steering axle (56) of the agricultural harvesting machine (1, 2) is defined and the inverted value α of said steering angle β is automatically adjusted at the at least one steerable support wheel (15).

18. An agricultural working machine according to claim 17 **characterised in that** associated with at least one running wheel (57) of the steering axle (56) of the agricultural harvesting machine (1, 2) is a wheel angle sensor (69) which produces a wheel angle signal and transmits it to a control unit (60) and the control unit (60) generates a steering angle signal for the at least one steerable support wheel (15) and transmits it to the steering cylinder (51) of the at least one steerable support wheel (15), wherein the steering angle signal causes pressure actuation or pressure relief of the steering cylinder (51).

19. An agricultural working machine according to one or more of the preceding claims **characterised in that** the support wheel arrangement (15, 30) is dismantleable.

20. An agricultural working machine according to one or more of the preceding claims **characterised in that** a pulling cylinder (70) connecting the agricultural harvesting machine (1, 2) to the receiving device (4, 5) is interposed between the receiving device (4, 5) and the agricultural harvesting machine (1, 2).

21. An agricultural working machine according to one or more of the preceding claims **characterised in that** the at least one steerable support wheel (15) is actively driven.

## Revendications

1. Machine agricole de travail avec une machine de récolte, un agencement de roues de jauge et au moins un dispositif de ramassage (4, 5) destiné à recevoir un appareil de travail agricole, la machine agricole de travail étant associée dans sa partie tournée vers l'appareil de travail à une ou plusieurs roues de jauge (15),
**caractérisée en ce que** la roue de jauge (15), au nombre d'au moins une, est portée par un cadre d'appui. (30) et le cadre d'appui (30) est en liaison active avec la machine agricole de récolte (1, 2) et avec le dispositif de ramassage (4, 5).

2. Machine agricole de travail selon la revendication 1, **caractérisée en ce que** le cadre d'appui (30) est formé d'un premier bras de support (23) et d'au moins un autre bras de support (35), le premier bras de support (23) étant en liaison active avec la machine agricole de récolte (1, 2) et l'autre bras de support (35), au nombre d'au moins un, avec le dispositif de ramassage (4, 5).

3. Machine agricole de travail selon la revendication 2, **caractérisée en ce que** le premier bras de support (23), au nombre d'au moins un, s'étend sensiblement dans la direction horizontale.

4. Machine agricole de travail selon la revendication 2, **caractérisée en ce que** l'autre bras de support (35), au nombre d'au moins un, s'étend sensiblement dans la direction verticale.

5. Machine agricole de travail selon une ou plusieurs des revendications précédentes, **caractérisée en ce que** les bras de support (23, 35) sont reliés de manière pivotante à la machine agricole de travail (1, 2) et au dispositif de ramassage (4, 5).

6. Machine agricole de travail selon une ou plusieurs des revendications précédentes, **caractérisée en ce qu'**au moins un bras de support (23, 35) est construit avec une longueur variable.

7. Machine agricole de travail selon la revendication 6, **caractérisée en ce que** le bras de support (35) de longueur variable, au nombre d'au moins un, est construit sous la forme d'un vérin de levage (33).

8. Machine agricole de travail selon la revendication 6, **caractérisée en ce que** le bras de support (35) de longueur variable, au nombre d'au moins un, est construit sous la forme d'un bras télescopique (36).

9. Machine agricole de travail selon une ou plusieurs des revendications précédentes, **caractérisée en ce que** la variation de la longueur du bras télescopique (36) et/ou du vérin de levage (33) est amortie par au moins un élément d'amortissement (39).

10. Machine agricole de travail avec un agencement de roues de jauge selon la revendication 1, **caractérisée en ce que** la roue de jauge (15), au nombre d'au moins une, est construite sous la forme d'une roue de jauge directrice (15).

11. Machine agricole de travail selon la revendication 10, **caractérisée en ce qu'**une pluralité de roues de jauge (15) sont disposées dans la zone de la machine agricole de travail (1, 2) tournée vers l'appareil de travail agricole (12, 13) et au moins une partie des roues de jauge (15) sont directrices.

12. Machine agricole de travail selon une ou plusieurs des revendications précédentes, **caractérisée en ce qu'**au moins une première roue de jauge directrice (15) et une autre roue de jauge directrice (15) peuvent pivoter autour d'axes de pivotement (19, 20) orientés sensiblement dans la direction verticale, la première roue de jauge directrice (15), au nombre d'au moins une, et l'autre roue de jauge directrice (15), au nombre d'au moins une, étant couplées l'une à l'autre par un mécanisme de couplage (48, 48, 50) et étant commandées par au moins un vérin de direction commun (51).

13. Machine agricole de travail selon la revendication 12, **caractérisée en ce que** le mécanisme de couplage (48, 49) passe le long de chaque bras de support (35) portant une roue de jauge directrice (15), les mécanismes partiels de direction (48, 49) passant le long des bras de support (325) étant reliés entre eux au niveau de l'essieu avant (14) de la machine agricole de travail (1, 2) par une traverse de liaison (50).

14. Machine agricole de travail selon une ou plusieurs des revendications précédentes, **caractérisée en ce que** le mécanisme partiel de direction (48, 49) est formé par un levier de direction (40) qui reçoit l'axe de pivotement (19, 20) considéré, et qui est relié de manière articulée par une biellette de liaison (47) à un levier coudé (43), le levier coudé (43) étant monté de manière à pouvoir pivoter autour d'un axe de pivotement (42) sensiblement vertical sur l'autre bras de support (23), au nombre d'au moins un, et les leviers coudés (43) de roues de jauge directrices (15) voisines étant reliés entre eux par une traverse de liaison (50) et s'engageant sur au moins un levier coudé (43) du vérin de direction (51) du mécanisme de couplage (48, 49, 50).

15. Machine agricole de travail selon une ou plusieurs des revendications précédentes, **caractérisée en ce que** le mouvement de direction de la roue de jauge directrice (15), au nombre d'au moins une, est couplé au mouvement de direction de l'essieu directeur (56), au nombre d'au moins un, de la machine agricole de récolte (1, 2).

16. Machine agricole de travail selon la revendication 15, **caractérisée en ce que** le couplage du mouvement de direction est obtenu par un couplage des vérins de direction (51, 68).

17. Machine agricole de travail selon la revendication 16, **caractérisée en ce que** l'angle de direction d'au moins une roue de roulement (57) de l'essieu directeur (56) de la machine agricole de récolte (1, 2) prend une valeur β et que la valeur inversée α de cet angle de direction β se règle automatiquement sur la roue de jauge directrice (15), au nombre d'au moins une.

18. Machine agricole de travail selon la revendication 17, **caractérisée en ce qu'**au moins une roue de roulement (57) de l'essieu directeur (56) de la machine agricole de récolte (1, 2) est associé à un capteur d'angle de roue (69) qui produit un signal d'angle de roue et le transmet à une unité de commande (60) et que l'unité de commande (60) produit un signal d'angle de direction pour la roue de jauge directrice (15), au nombre d'au moins une, et le transmet au vérin de direction (51) de la roue de jauge directrice (15), au nombre d'au moins une, sur quoi le signal d'angle de direction commande une augmentation de pression ou une décharge de pression du vérin de direction (51).

19. Machine agricole de travail selon une ou plusieurs des revendications précédentes, **caractérisée en ce que** l'agencement de roues de jauge (15, 30) est démontable.

20. Machine agricole de travail selon une ou plusieurs des revendications précédentes, **caractérisée en ce qu'**il est inséré entre le dispositif de ramassage (4, 5) et la machine agricole de récolte (1, 2) un vérin de traction (70) qui relie la machine agricole de récolte (1, 2) avec le dispositif de ramassage (4, 5).

21. Machine agricole de travail selon une ou plusieurs des revendications précédentes, **caractérisée en ce que** la roue de jauge directrice (15), au nombre d'au moins une, est entraînée activement.
